# EUROPEAN PATENT APPLICATION

(11) **EP 1 316 826 A1**
(43) Date of publication of application: **04.06.2003**
(21) Application number: 01310048.2
(22) Date of filing: 30.11.2001
(51) Int. Cl.: G02B 6/42

(54) **Apparatus and method for coupling an optical fibre to an optical device**

(71) Applicant: Agilent Technologies, Inc. (a Delaware corporation), Palo Alto, CA 94303 (US)
(72) Inventor: Matthews, Nigel, Ipswich, Suffolk IP4 3NE (GB)
(74) Representative: Coker, David Graeme

(57) **Abstract**

An optical fibre (6) extends through a protective tube (7) and has an end facet for coupling to an optical device (4). While the optical fibre is maintained in a positioned aligned with the optical device, a first alignment structure (10) having an open spring clip (12) is moved over the protective tube (7) until the tube is within the open spring clip. The first alignment structure (10) is then fixed in position and the tube (7) is fixed to the structure. A second alignment structure (11) is then positioned so that the tube (7) is within a tube receiving structure (13) which is deformable and the second alignment structure (11) is then fixed in position and the tube (7) is fixed to the structure. After the tube (7) is released the tube receiving structure (13) is deformed so as to adjust the position of the lens to correctly align with the optical coupling facet of the optical device and to compensate for any movement that occurred during the fixing process.

## Description

### Field of the Invention

This invention relates to an apparatus and method for coupling an optical fibre to an optical device, and more particularly, though not exclusively, to an apparatus for coupling an optical fibre in an optical module in alignment with an optical device, such as a laser diode.

### Background of the Invention

As is well known, in general, in an optical module there is provided an optical device, such as a laser diode or a photo diode, mounted on a heatsink, and an optical fibre mounted in a fibre attach element. The heatsink and the fibre attach element are both mounted on an optical submount in such a way that the fibre and the optical device are maintained in alignment. The submount is housed in a package housing so as to protect and isolate the submount and the components mounted thereon.

In order to produce efficient optical coupling between the optical device and the optical fibre, the fibre and the device must be accurately aligned and fixed in the alignment. This requires a tolerance of better than 0.1 µm in the X-Y plane. However, the usual method of welding a tube containing the fibre to a support can result in up to 60µm of weldshift.

One known apparatus and method for coupling an optical fibre to an optical device is described in US Patent No. 5,570,444, in which an end of an optical fibre is held in alignment with an injection laser by securing the fibre to an elongate support member whose end nearer the injection laser is then laser beam welded to a pair of slide members that have previously been secured by laser beam welding to leave a precisely dimensioned small gap between the support and slide members. The smallness of the gap minimizes the displacement of the fibre during the welding process. The end of the support member remote from the injection laser is secured by laser beam welding to a plastically deformable saddle. However, this method is costly and difficult to produce efficiently, since it involves numerous parts and a complex welding sequence.

### Brief Summary of the Invention

The present invention therefore seeks to provide an apparatus and method for coupling for coupling an optical fibre to an optical device, which overcomes, or at least reduces the above-mentioned problems of the prior art.

Accordingly, in a first aspect, the invention provides an apparatus for optically coupling an optical fibre to an optical device, the apparatus comprising a base and a mounting element fixedly mounted on the base, the first mounting element having an optical device with an optical coupling facet mounted thereon, first and second alignment structures mounted on the base, and a tube having an optical fibre extending therethrough so that an end of the optical fibre is adjacent the optical device, wherein the first alignment structure comprises a self-aligning clamp having at least one foot and a spring clip, the spring clip being initially openable to fit around the tube and closable to clamp the tube, the first alignment structure being positioned adjacent the first mounting element, while the tube is maintained in a position so that the end of the optical fibre adjacent the optical device is optically aligned with the optical coupling facet, by opening the spring clip so that the spring clip fits around the tube until the foot of the first alignment structure is in contact with the base and closing the spring clip so that the position of the first alignment structure is adjusted as the spring clip is closed without movement of the tube and the foot of the first alignment structure then being fixed to the base, the tube then being fixed to the first alignment structure, and the second alignment structure being positioned and fixed to the tube and the base after the first alignment structure is fixed to the tube and the base, the second alignment structure being deformable to allow the position of the end of the optical fibre adjacent the optical device to be adjusted to correctly align with the optical coupling facet.

Preferably, the first alignment structure comprises two feet, with the spring clip being positioned therebetween. Preferably, the second alignment structure comprises two feet, and a tube receiving element positioned therebetween.

According to a second aspect, the invention provides a method for optically coupling an optical fibre to an optical device, the optical device having an optical coupling facet and the optical fibre having a lens on an end thereof, the method comprising the steps of providing a base element having the optical device mounted thereon, providing a tube through which the optical fibre extends so that the end of the optical fibre is adjacent the optical device, providing a first alignment structure having at least one foot and a spring clip, providing a second, deformable alignment structure having at least one foot and a tube receiving structure, moving the tube until the lens is in alignment with the optical coupling facet of the optical device and maintaining the tube in the aligned position, opening the spring clip and moving the first alignment structure until the at least one foot is in contact with the base element and the tube is within the open spring clip, closing the spring clip to allow the first alignment structure to self-align to the position of the tube, while maintaining the foot of the first alignment structure in contact with the base element, fixing the at least one foot of the first alignment structure to the base element and the tube to the first alignment structure, positioning the second alignment structure so that the tube is within the tube receiving structure and the at least one foot of the second alignment structure is in contact with the base element, fixing the at least one foot of the second alignment structure to the base element and the tube to the tube receiving structure, releasing the tube from being maintained in position, and deforming the second alignment structure so as to adjust the position of the lens to correctly align with the optical coupling facet of the optical device.

In a preferred embodiment, the step of fixing the at least one foot of the first alignment structure to the base element and the tube to the first alignment structure comprises spot welding the at least one foot of the first alignment structure to the base element and the tube to the first alignment structure.

Preferably, the step of fixing the at least one foot of the second alignment structure to the base element and the tube to the second alignment structure comprises spot welding the at least one foot of the second alignment structure to the base element and the tube to the second alignment structure.

According to a third aspect, the invention provides an alignment structure for use in the method described above, the alignment structure comprising a self-aligning clamp having at least one foot and a spring clip, the spring clip being biasable into an open position and releasable into a closed position and being configured to receive a protective tube containing an optical fibre therein.

In a preferred embodiment, the alignment structure comprises two feet, with the spring clip being positioned therebetween.

### Brief Description of the Drawings

An embodiment of the invention will now be more fully described, by way of example, with reference to the drawings, of which:
FIG. 1 shows a schematic cut-away diagram of an optical module having an optical coupling arrangement mounted therein;
FIG. 2 shows a perspective view of the optical coupling arrangement of FIG. 1;
FIG. 3 shows a perspective view of one alignment structure used in the optical coupling arrangement of FIG. 2;
FIG. 4 shows a perspective view of the alignment structure of FIG. 3 with an optical fibre protective tube in position therein; and
FIG. 5 shows a perspective view of a second alignment structure used in the optical coupling arrangement of FIG. 2.

### Detailed Description of the Drawings

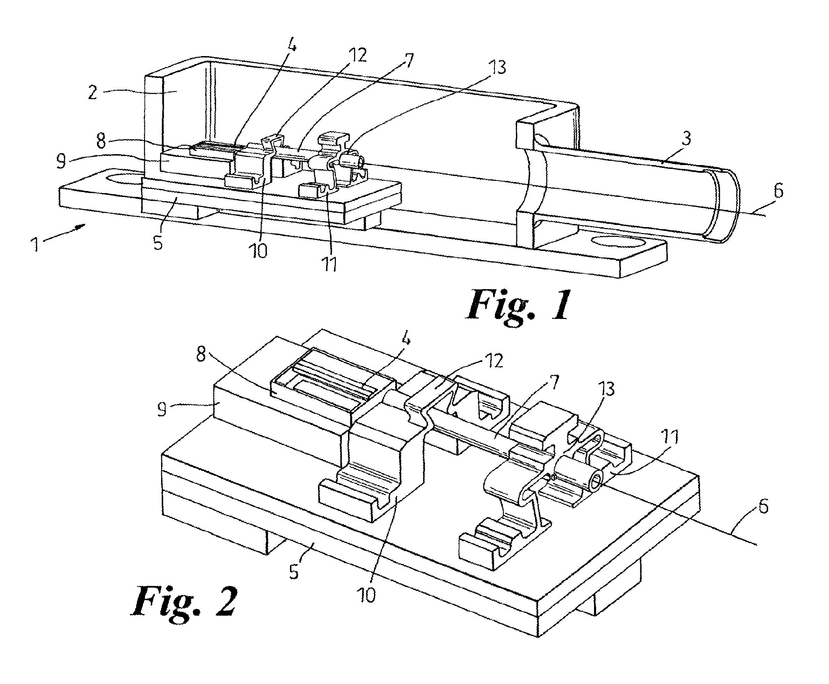

Thus, in a preferred embodiment of the invention, as partly shown in FIG. 1, an optical module 1 has a housing 2, which may be made of metal, such as Molybdenum, Copper - Tungsten (CuW), or Kovar. A conduit 3 passes into the housing 2 and is attached to the housing, the conduit 3 also being formed of metal. The conduit 3 contains within it an optical fibre 6 which is to be coupled to an optical device 4 mounted on a base substrate 5 within the housing 2. The conduit 3 and the optical fibre 6 extend outwardly from the module 1 for connection to a further component that the optical fibre may be coupled to. This may be some way away, of course, especially if the module 1 forms part of an undersea repeater station.

The optical fibre 6 that is within the module 1 needs to be aligned with the optical device 4, which may be a semiconductor laser diode, such that light is coupled from a lasing portion of the diode 4 into the end face of the optical fibre 6. The end face (or facet) of the optical fibre 6 is usually arranged to be tapered, so that as much of the light from the laser diode 4 as possible is coupled into the fibre 6. The laser diode 4 is mounted on a heatsink 8, which is made of a thermally conducting material, such as, for example, aluminum nitride (AIN). The heatsink 8 is itself mounted on a component portion 9 of the base substrate 5, which may be made of an alloy such as Kovar, Invar, Copper-Tungsten (CuW), or Molybdenum. The optical fibre 6 is enclosed within a protective tube 7 mounted in a pair of alignment structures 10 and 11 made of a low thermal expansion alloy. A first of the alignment structures 10 includes a spring clip element 12, into which the protective tube 7 containing the optical fibre 6 is clamped, as will be further described below. A second of the alignment structures 11 includes a plastically deformable portion 13, into which the protective tube 7 containing the optical fibre 6 is mounted, as will also be further described below. The pair of alignment structures 10 and 11 are mounted on the base substrate 5 in order to maintain the laser diode and the optical fibre in alignment, as will be more fully described below.

As will be more clearly seen with reference to FIGs 2 to 5, the laser diode 4 (or other optical device to which the optical fibre is to be coupled) is mounted on the heatsink 8, which is mounted on the component portion 9 of the base substrate 5. The base substrate 5 has a further portion on which the pair of alignment structures 10 and 11 are mounted when the optical fibre 6 is in alignment with the laser diode 4.

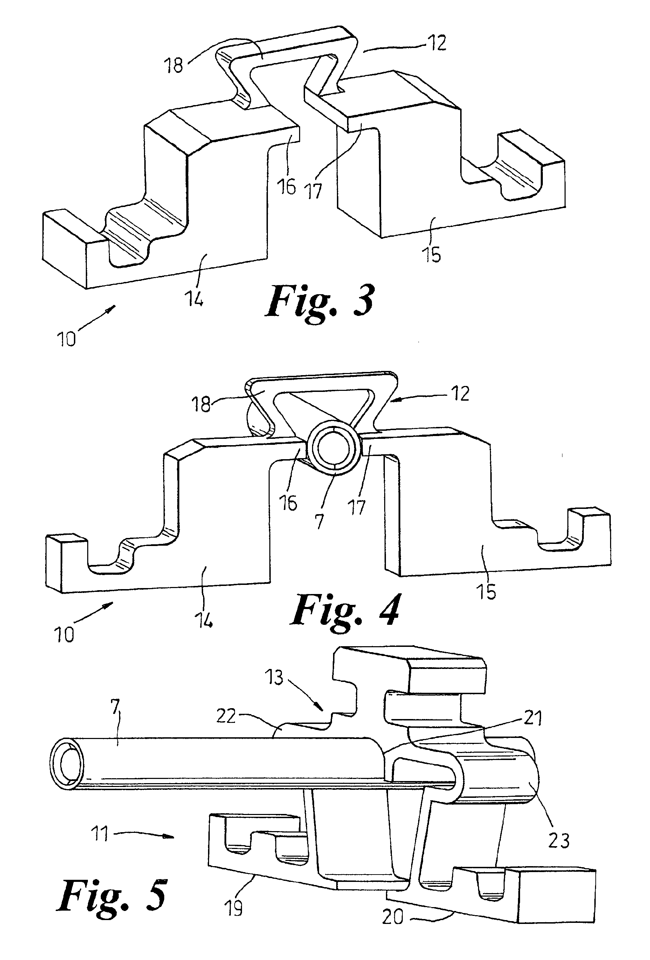

The first alignment structure 10 is more clearly shown in FIGs 3 and 4. The spring clip element 12 of the first alignment structure 10 is arranged between a pair of feet 14 and 15 at a height above the base of the feet such that the fibre 6 (not shown in FIG. 4) within the tube 7 positioned within the spring clip element 12 will be approximately (although as accurately as possible) at the height of the laser diode above the surface of the base substrate 5. The spring clip element 12 has a pair of clamping arms 16 and 17 arranged to clamp the protective tube 7 between them. The clamping arms are joined by a biasing member 18, that extends above the clamping arms 16 and 17 (as shown) to allow the protective tube 7 to be positioned between the clamping arms. The first alignment structure is thus configured to permit it to be brought over the protective tube 7 with the clamping arms biased away from each other and then to release the clamping arms to clamp the tube between them.

The second alignment structure 11 is more clearly shown in FIG 5. The plastically deformable portion 13 of the second alignment structure 11 is arranged between a pair of feet 19 and 20 at a height above the base of the feet such that the fibre 6 (not shown in FIG. 5) within the tube 7 positioned within the plastically deformable portion 13 will be approximately (although as accurately as possible) at the height of the laser diode above the surface of the base substrate 5. The plastically deformable portion 13 has a receiving portion 21 of a generally semi-circular cross-section of a diameter to receive the protective tube 7. The plastically deformable portion 13 is configured with deformable portions 22 and 23 on either side of the receiving portion 21 so as to allow it to be deformed in any direction, whilst retaining the protective tube 7 so as to thereby move the protective tube slightly to compensate for any movement of the fibre relative to the laser die during the mounting process, as will be further described below.

In order to fix the fibre 6 in accurate alignment with the laser diode 4, the end facet of the fibre 6, within the protective tube 7, is first brought into alignment with the laser diode 4. This is usually done by measuring the amount of light coupled into the fibre as it is moved close to the laser diode until the amount of light is at a maximum. The tube 7 is then maintained in that position using a restraining force provided by an aligning machine (not shown). While the tube 7 (and fibre) are maintained in position, the first alignment structure 10 is brought above the tube 7 and then lowered over the tube 7 at a location close to the laser diode, while the spring clip element 12 is held open, so that the tube 7 fits between the two clamping arms 16 and 17 of the spring clip element 12. When the tube 7 is in position between the two clamping arms 16 and 17, and the two feet 14 and 15 are in contact with the base substrate 5, the clamping arms 16 and 17 are released from their open position so that they return to their unbiased position and thereby clamp the tube 7 between them. While the clamping arms 16 and 17 are returning to their unbiased position, the feet 14 and 15 are maintained in contact with the base substrate 5, although they are otherwise free to "float" over the top of the base substrate 5 so that the first alignment structure settles in a self-aligned position clamping the tube 7 in the maintained position of the tube.

The protective tube 7 is then spot welded, or otherwise affixed, to the first alignment structure 10, conveniently in the region of the spring clip element 12, and the feet 14 and 15 of the first alignment structure 10 are spot welded, or otherwise affixed, to the base substrate 5.

Still maintaining the protective tube 7 in position, the second alignment structure 11 is then brought above the tube 7 and then lowered over the tube 7 at a location spaced from and further away from the laser diode than the first alignment structure 10. The tube 7 fits into the receiving portion 21 of the plastically deformable portion 13. When the tube 7 is in position in the receiving portion 21 of the plastically deformable portion 13, the two feet 19 and 20 are in contact with the base substrate 5.

The protective tube 7 is then spot welded, or otherwise affixed, to the second alignment structure 11, conveniently in the region of the receiving portion 21, and the feet 19 and 20 of the second alignment structure 11 are spot welded, or otherwise affixed, to the base substrate 5.

The restraining force maintaining the protective tube 7 in position is then removed, and the plastically deformable portion 13 of the second alignment structure 11 is deformed to compensate for any movement in the alignment of the fibre to the laser diode during the welding (or fixing) process. Since the protective tube 7 is fixed to the first alignment structure 10, the welding point or points therefore serve as a fulcrum about which any movement of the tube 7 caused by movement of the plastically deformable portion 13 takes place. It will therefore be appreciated that the amount of movement required of the plastically deformable portion 13 as compared to the amount of movement of the end facet of the optical fibre will depend on the ratio of distance between the fulcrum and the end facet to the distance between the fulcrum and the plastically deformable portion 13. For example, with a movement of 100µm of the second alignment structure made up of 75µm of elastic movement and 25µm plastic movement, a convenient distance ratio will provide up to 5µm of plastic movement of the end facet of the optical fibre 6. The design of the spring clip element of the first alignment structure is such that the manufacturing tolerance is reduced by up to 40µm and the weldshift tolerance is reduced to a few µm. Therefore, the 5µm of plastic movement of the end facet of the optical fibre 6 is enough to compensate for any weld shift that may occur during the process of welding the protective tube to the alignment structures and the alignment structures to the base substrate.

It will be appreciated that although only one particular embodiment of the invention has been described in detail, various modifications and improvements can be made by a person skilled in the art without departing from the scope of the present invention. For example, a metalised fibre could be inserted directly into the structure for soldering.

## Claims

1. An apparatus (1) for optically coupling an optical fibre (6) to an optical device (4), the apparatus (1) comprising a base (5) and a mounting element (8, 9) fixedly mounted on the base (5), the mounting element having the optical device (4) mounted thereon, first and second alignment structures (10, 11) mounted on the base (5), and a protective element (7) having the optical fibre (6) extending therethrough so that an end of the optical fibre (6 ) is adjacent the optical device (4), wherein the first alignment structure (10) comprises a self-aligning clamp having at least one foot and a spring clip (12), the spring clip (12) being initially openable to fit around the protective element (7) and closable to clamp the protective element (7), the first alignment structure (10) being positioned adjacent the mounting element (8), while the protective element (7) is maintained in a position so that the end of the optical fibre (6) adjacent the optical device (4) is optically aligned with the optical device (4), by opening the spring clip (12) so that the spring clip (12) fits around the protective element (7) until the foot of the first alignment structure (10) is in contact with the base (5) and closing the spring clip (12) so that the position of the first alignment structure (10) is adjusted as the spring clip (12) is closed without movement of the protective element (7) and the foot of the first alignment structure (10) then being fixed to the base (5), the protective element (7) then being fixed to the first alignment structure (10), and the second alignment structure (11) being positioned and fixed to the protective element (7) and the base (5) after the first alignment structure (10) is fixed to the protective element (7) and the base (5), the second alignment structure (11) being deformable to allow the position of the end of the optical fibre (6) adjacent the optical device (4) to be adjusted to correctly align therewith.

2. An apparatus according to claim 1, wherein the first alignment structure (10) comprises two feet, with the spring clip (12) being positioned therebetween.

3. An apparatus according to claim 1, wherein the second alignment structure (11) comprises two feet, and a protective element receiving element (13) positioned therebetween.

4. A method for optically coupling an optical fibre (6) to an optical device (4), the method comprising the steps of:
providing a base element (5) having the optical device (4) mounted thereon;
providing a protective element (7) through which the optical fibre (6) extends so that the end of the optical fibre (6) is adjacent the optical device (4);
providing a first alignment structure (10) having at least one foot and a spring clip (12);
providing a second, deformable alignment structure (11) having at least one foot and a protective element receiving structure (13);
moving the protective element (7) until the optical fibre (6) is in alignment with the optical device (4) and maintaining the protective element (7) in the aligned position;
opening the spring clip (12) and moving the first alignment structure (10) until the at least one foot is in contact with the base element (5) and the protective element (7) is within the open spring clip (12);
closing the spring clip (12) to allow the first alignment structure (10) to self-align to the position of the protective element (7), while maintaining the foot of the first alignment structure (10) in contact with the base element (5);
fixing the at least one foot of the first alignment structure (10) to the base element (5) and the protective element (7) to the first alignment structure (10);
positioning the second alignment structure (11) so that the protective element (7) is within the protective element receiving structure (13) and the at least one foot of the second alignment structure (11) is in contact with the base element (5);
fixing the at least one foot of the second alignment structure (11) to the base element (5) and the protective element (7) to the protective element receiving structure (13);
releasing the protective element (7) from being maintained in position; and
deforming the second alignment structure (11) so as to adjust the position of the optical fibre (6) to correctly align with the optical device (4).

5. A method according to claim 4, wherein the step of fixing the at least one foot of the first alignment structure (10) to the base element (5) and the protective element (7) to the first alignment structure (10) comprises spot welding the at least one foot of the first alignment structure (10) to the base element (5) and the protective element (7) to the first alignment structure (10).

6. A method according to claim 4, wherein the step of fixing the at least one foot of the second alignment structure (11) to the base element (5) and the protective element (7) to the second alignment structure (11) comprises spot welding the at least one foot of the second alignment structure (11) to the base element (5) and the protective element (7) to the second alignment structure (11).

7. An alignment structure (10) for use in the method of any one of claims 4 to 6, the alignment structure (10) comprising a self-aligning clamp having at least one foot and a spring clip (12), the spring clip (12) being biasable into an open position and releasable into a closed position and being configured to receive a protective element (7) therein.

8. An alignment structure (10) according to claim 7, wherein the alignment structure (10) comprises two feet, with the spring clip (12) being positioned therebetween.
